# EUROPEAN PATENT APPLICATION

(11) **EP 4 604 616 A1**
(43) Date of publication of application: **20.08.2025**
(21) Application number: 25157338.2
(22) Date of filing: 12.02.2025
(51) Int. Cl.: H04W 36/00, H04W 48/16, H04W 84/12, H04W 88/06

(54) **CHANGING TO ROAMING THRESHOLDS FOR EXECUTING ROAMING IF SOURCE AND TARGET ACCESS POINTS HAVE DIFFERENT FREQUENCY BANDS**

(30) Priority: 15.02.2024 JP 2024021449
(71) Applicant: CANON KABUSHIKI KAISHA, Tokyo 146-8501 (JP)
(72) Inventor: SUNAMI, Ryosuke, Ohta-ku, Tokyo 146-8501 (JP)
(74) Representative: TBK

(57) **Abstract**

A communication apparatus comprises an obtaining means configured to obtain information of a plurality of access points of different frequency bands; a change means configured to compare a frequency band during connection and a frequency band of a roaming target, and change a roaming condition for executing roaming; and an execution means configured to execute roaming in a case where a signal of the frequency band during connection satisfies the roaming condition.

## Description

### BACKGROUND OF THE INVENTION

### Field of the Invention

The present invention relates to a communication apparatus, a communication method, and a non-transitory computer-readable storage medium.

### Description of the Related Art

There is known roaming of switching a communication apparatus between access points (to be referred to as APs hereinafter) of the same SSID. For roaming, a function activation condition is set. For example, when one of the signal-to-noise ratio (to be referred to as SNR hereinafter), the Received Signal Strength Indicator (to be referred to as RSSI hereinafter), and the like drops to be lower than a predetermined threshold, roaming is executed. The SNR is the ratio of a signal to noise. If the SNR is high, the influence of noise is small and the signal is strong, and if it is low, the influence of noise is large and the signal is weak. The RSSI is the indicator of the strength of a received signal. If the RSSI is high, the signal is strong, and if it is low, the signal is weak.

Japanese Patent Laid-Open No. 2014-232977 discloses a method of scanning the same band as the band of a currently connected AP channel as a scan band of high priority order, and when there is no roaming destination AP as the result of scan, scanning a band different from the band of the currently connected channel.

Japanese Patent Laid-Open No. 2023-72130 discloses a method of reading out roaming start conditions that associate position information of a mobile unit, direction information representing a direction in which the mobile unit enters a position represented by the position information, and an RSSI threshold, and setting an RSSI threshold based on the detected value of the position information of the mobile unit and that of the direction information of the mobile unit.

### SUMMARY OF THE INVENTION

However, in the conventional techniques disclosed in the above-described patent literatures, the throughput after roaming may decrease as a result of roaming when the frequency band of a connected AP and that of a roaming destination AP are different in roaming. This is generally because the throughput is different depending on the frequency band.

The present invention provides a technique of reducing a decrease in throughput after roaming.

The present invention in its first aspect provides a communication apparatus as specified in claims 1 to 10.

The present invention in its second aspect provides a communication method as specified in claim 11.

The present invention in its third aspect provides a non-transitory computer-readable storage medium as specified in claim 12.

Further features of the present invention will become apparent from the following description of exemplary embodiments (with reference to the attached drawings).

### BRIEF DESCRIPTION OF THE DRAWINGS

Fig. 1A is a block diagram showing the hardware arrangement of a digital camera 100;
Fig. 1B is a perspective front view of the digital camera 100;
Fig. 1C is a perspective rear view of the digital camera 100;
Fig. 2A is a view of a setup screen for setting communication;
Fig. 2B is a view of a selection screen for selecting a network;
Fig. 2C is a view of a completion screen showing the completion of connection;
Fig. 3 is a view showing a system configuration including the digital camera according to the embodiment;
Fig. 4 is a sequence chart showing processing between a digital camera and an AP according to the first embodiment;
Fig. 5 is a flowchart showing processing of the digital camera according to the first embodiment;
Fig. 6 is a sequence chart showing processing between a digital camera and an AP according to the second embodiment; and
Figs. 7A and 7B is a flowchart showing processing of the digital camera according to the second embodiment.

### DESCRIPTION OF THE EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

### <Arrangement of Digital Camera>

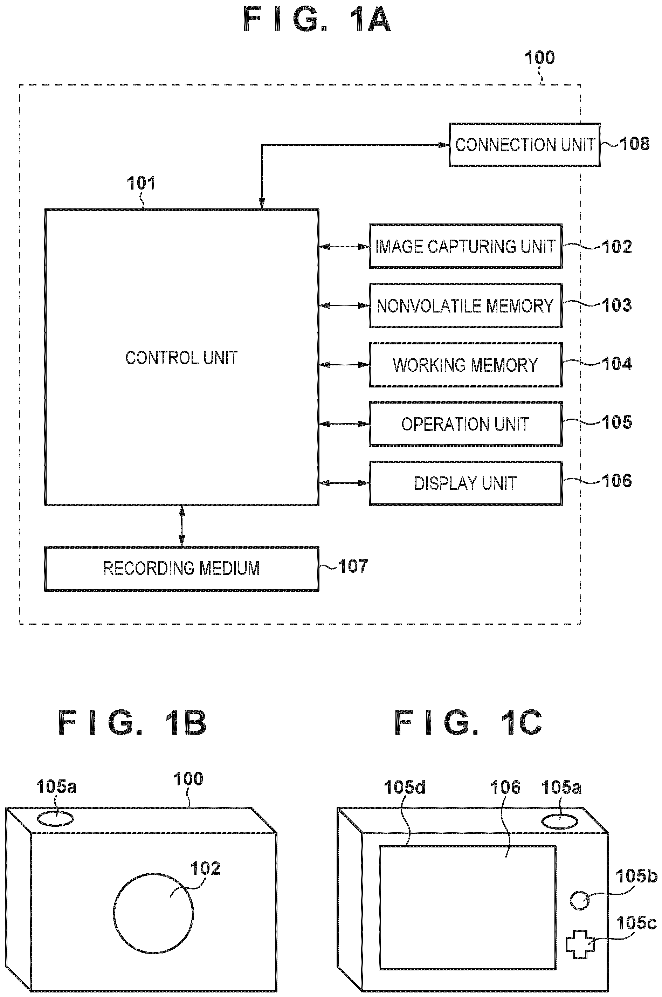

First, the arrangement and functions of a digital camera 100 according to an embodiment will be explained with reference to Figs. 1A to 1C. Figs. 1A to 1C are views showing the arrangement of the digital camera according to the embodiment. More specifically, Fig. 1A is a block diagram showing the hardware arrangement of the digital camera 100. Fig. 1B is a perspective front view of the digital camera 100. Fig. 1C is a perspective rear view of the digital camera 100.

Note that a digital camera capable of shooting a video (to be referred to as an image hereinafter) such as a still image or a moving image will be described as an example of a communication apparatus in the embodiment, but the application target of the embodiment is not limited to a digital camera. For example, the communication apparatus may be an information processing apparatus such as a tablet device or personal computer with a camera function, a surveillance camera, a medical camera, or the like. The digital camera 100 includes a control unit 101, an image capturing unit 102, a nonvolatile memory 103, a working memory 104, an operation unit 105, a display unit 106, a recording medium 107, and a connection unit 108.

The control unit 101 is an arithmetic processing device that comprehensively controls the whole digital camera 100. The control unit 101 implements various processes such as communication processing and control processing (to be described later) by executing programs stored in the nonvolatile memory 103 (to be described later). The control unit 101 includes, for example, a Central Processing Unit (CPU). Instead of or in addition to the CPU, the control unit 101 may include other processors such as a Micro Processing Unit (MPU), a Graphics Processing Unit (GPU), and a Quantum Processing Unit (QPU). Note that part or all of the apparatus may be controlled by sharing processing between one or a plurality of hardware units such as an Application Specific Integrated Circuit (ASIC), a Field Programmable Gate Array (FPGA), and the like, instead of controlling the overall apparatus by the control unit 101.

The control unit 101 implements, for example, the functions of an obtaining means, a change means, and an execution means by reading programs stored in the nonvolatile memory 103. More specifically, the control unit 101 obtains information of a plurality of access points (to be referred to as APs hereinafter) of different frequency bands via the connection unit 108. The control unit 101 compares a connected frequency band with a roaming target frequency band, and changes a roaming condition for executing roaming. When a signal of a connected frequency band satisfies the roaming condition, the control unit 101 executes roaming. Note that the contents of more detailed processing by the control unit 101 will be described later.

The image capturing unit 102 includes a lens group including a zoom lens and a focus lens, and a shutter having a stop function. The image capturing unit 102 includes an image sensor constituted by a Charge Coupled Device (CCD) or a Complementary Metal-Oxide-Semiconductor (CMOS) element, or the like that converts an object image into an electrical signal, and an A/D converter that converts an analog image signal output from the image sensor into a digital signal. Under the control of the control unit 101, the image capturing unit 102 converts, into an electrical signal by the image sensor, object image light formed by a lens included in the image capturing unit 102, performs noise reduction processing and the like, and outputs image data formed from a digital signal. The image data output from the image capturing unit 102 is recorded on, for example, the recording medium 107.

The nonvolatile memory 103 is an electrically erasable and recordable memory, and for example, an Electrically Erasable Programmable Read-Only Memory (EEPROM) or the like is used. In the nonvolatile memory 103, constants, programs, and the like for the operation of the control unit 101 are recorded. The programs here are programs for executing communication processing and control processing (to be described later) in the embodiment.

The working memory 104 temporarily stores programs and data. The working memory 104 is, for example, a Random Access Memory (RAM). The working memory 104 is used as a working area for deploying constants and variables for the operation of the control unit 101, programs read out from the nonvolatile memory 103, and the like. The working memory 104 is used as a buffer memory that temporarily holds image data captured by the image capturing unit 102, and the image display memory of the display unit 106.

The operation unit 105 includes operation members such as various switches, buttons, and a touch panel that accept various operations from a user. The operation unit 105 includes, for example, a shutter button 105a, a playback button 105b, a four-way key 105c, a touch panel 105d, and the like, as shown in Figs. 1B and 1C. The shutter button 105a accepts an operation regarding shooting of an object. The playback button 105b accepts an operation regarding playback of a shot image. The four-way key 105c includes up, down, left, and right buttons, and accepts an operation regarding various settings of the camera. The touch panel 105d is formed integrally with the display unit 106 and accepts various operations.

The shutter button 105a is turned on by a so-called half stroke (shooting preparation instruction) during the operation, and generates the first shutter switch signal. Upon receiving the first shutter switch signal, the control unit 101 controls the image capturing unit 102 to start one of processes including auto focus (AF) processing, auto exposure (AE) processing, auto white balance (AWB) processing, and flash pre-emission (EF) processing, and the like. The shutter button 105a is turned on by a so-called full stroke (shooting instruction) upon completion of the operation, and generates the second shutter switch signal. Upon receiving the second shutter switch signal, the control unit 101 starts a series of shooting processes from readout of a signal from the image capturing unit 102 to write of image data on the recording medium 107.

The display unit 106 performs display of a viewfinder image at the time of shooting, display of a shot image, display of a text for an interactive operation, and the like. The display unit 106 is, for example, a display device such as a liquid crystal display or an organic EL display. The display unit 106 may be integrated with the digital camera 100 or be an external device connected to the digital camera 100. The digital camera 100 suffices to be connectable to the display unit 106 and have a function of controlling display of the display unit 106.

The recording medium 107 records, as an image file, image data output from the image capturing unit 102. The control unit 101 reads out the image file recorded on the recording medium 107. The recording medium 107 may be a memory card or hard disk drive attached to the digital camera 100, or a flash memory or hard disk drive incorporated in the digital camera 100. The digital camera 100 suffices to have a means for accessing at least the recording medium 107.

The connection unit 108 is an interface for connecting to an external device in a communication-enabling manner. The digital camera 100 according to the embodiment can exchange data with the external device via the connection unit 108. For example, the digital camera 100 transmits, to the external device via the connection unit 108, image data output from the image capturing unit 102. The digital camera 100 can receive a control instruction output from the external device via the connection unit 108. Note that in the embodiment, the connection unit 108 includes an interface for communicating with an external device via a wireless LAN in accordance with the IEEE 802.11 standards. The control unit 101 implements wireless communication with an external device by controlling the connection unit 108.

### <Display Screen of Digital Camera>

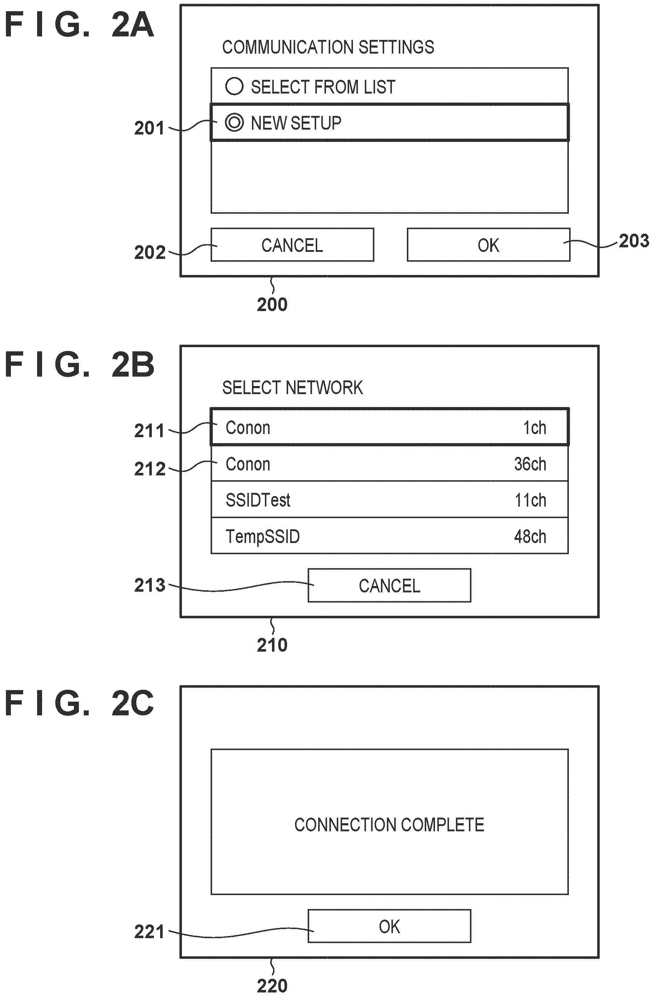

Next, the display screen of the digital camera 100 according to the embodiment will be explained with reference to Figs. 2A to 2C. Figs. 2A to 2C show the display screen of the digital camera. Fig. 2A is a view of a setup screen for setting communication. Fig. 2B is a view of a selection screen for selecting a network. Fig. 2C is a view of a completion screen showing the completion of connection.

As shown in Fig. 2A, a setup screen 200 includes a new setup button 201, a cancel button 202, and an OK button 203. The setup screen 200 is a screen for setting connection with an external device such as an AP. The setup screen 200 is displayed on the display unit 106 of the digital camera 100.

The new setup button 201 is a button for starting connection of the control unit 101 with an external device such as an AP.

The cancel button 202 is a button for canceling connection of the control unit 101 with an external device such as an AP.

The OK button 203 is a button for deciding the operation of the digital camera 100. If the user selects the OK button 203 in a state in which the new setup button 201 is selected, the control unit 101 executes scan of an AP. In this scan, wireless reception of a signal including an SSID and a BSSID from one AP or each of a plurality of APs is tried.

As shown in Fig. 2B, a selection screen 210 includes a connection button 211, a connection button 212, and a cancel button 213. The selection screen 210 is a screen for selecting an external device such as an AP to be connected. The selection screen 210 is displayed on the display unit 106 of the digital camera 100.

The connection button 211 is a button that allows a user to select an AP to which the digital camera 100 is connected. If the connection button 211 is selected, the control unit 101 executes a trial of connection to an AP based on a displayed SSID and ch. For example, when the connection button 211 is selected, the control unit 101 executes a trial of connection to an AP having an SSID "Conon" and a ch "1 ch".

The connection button 212 is a button that allows a user to select an AP to which the digital camera 100 is connected. If the connection button 212 is selected, the control unit 101 executes a trial of connection to an AP based on a displayed SSID and ch. For example, when the connection button 212 is selected, the control unit 101 executes a trial of connection to an AP having an SSID "Conon" and a ch "36 ch".

The cancel button 213 is a button that allows a user to cancel connection between the digital camera 100 and an external device such as an AP.

As shown in Fig. 2C, a completion screen 220 includes an OK button 221. The completion screen 220 is a screen displayed upon completion of connection between the digital camera 100 and an external device such as an AP. The completion screen 220 is displayed on the display unit 106 of the digital camera 100.

The OK button 221 is a button for confirming the completion of connection with an external device by the digital camera 100.

### <System Configuration Including Digital Camera>

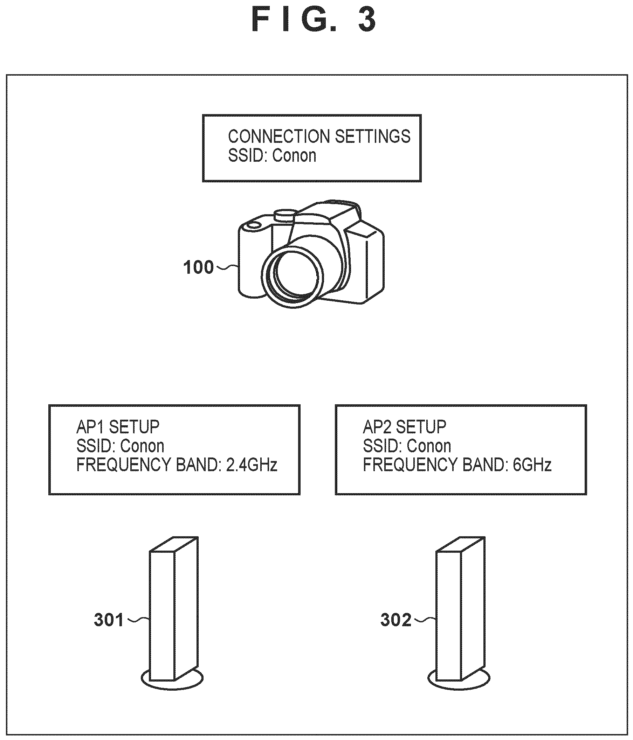

Next, a system configuration including the digital camera 100 according to the embodiment will be explained with reference to Fig. 3. Fig. 3 is a view showing the system configuration including the digital camera 100. The system includes the digital camera 100, and APs 301 and 302 each serving as an external device that functions as an access point.

The digital camera 100 is set so that it can connect to the APs 301 and 302 having an SSID "Conon".

The AP 301 is set to the SSID "Conon" and a frequency band "2.4 GHz".

The AP 302 is set to the SSID "Conon" and a frequency band "6 GHz". That is, the frequency band of the AP 301 is different from that of the AP 302.

### (First Embodiment)

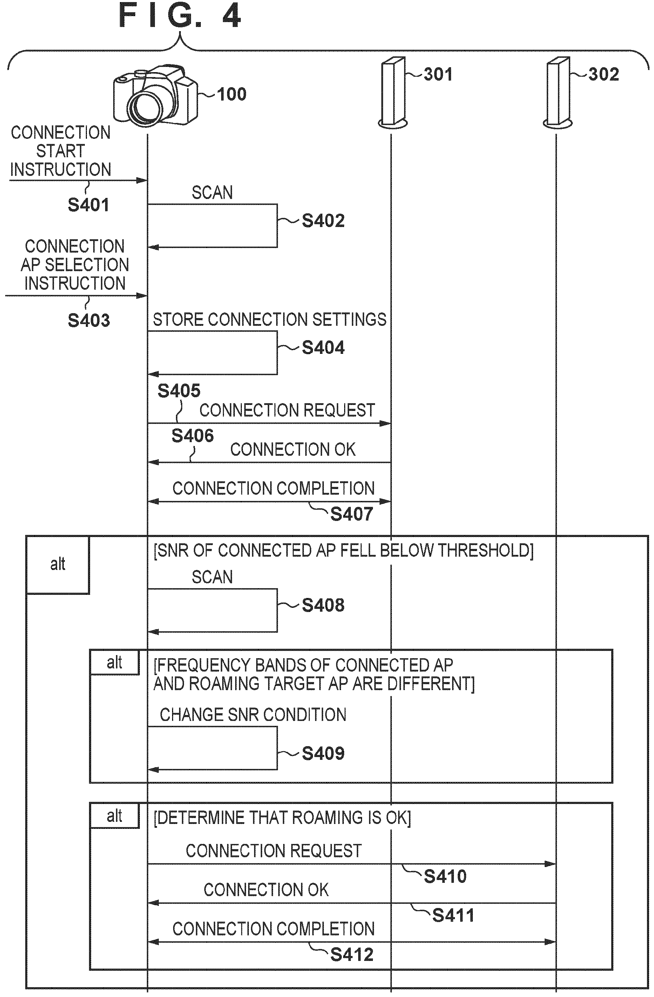

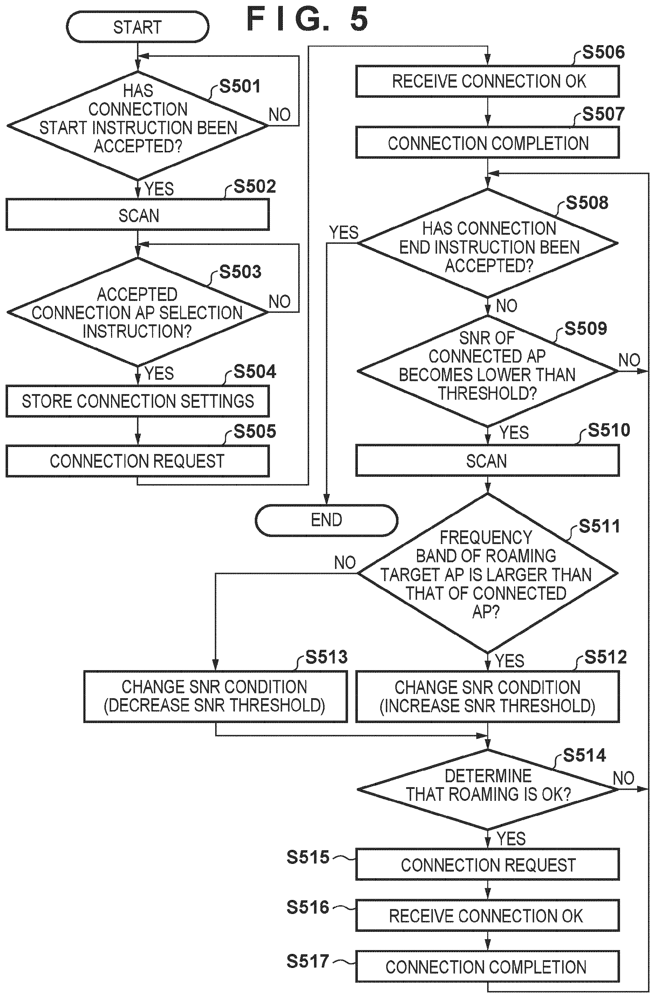

A roaming method according to the first embodiment will be explained with reference to Figs. 4 and 5.

### <Control Sequence of Digital Camera>

The control sequence of a digital camera 100 according to the first embodiment will be explained with reference to Fig. 4. Fig. 4 is a sequence chart showing processing between the digital camera and an AP according to the first embodiment.

In S401, a control unit 101 of the digital camera 100 accepts a connection start instruction from the user via an operation unit 105. For example, in a state in which a setup screen 200 is displayed on a display unit 106, as shown in Fig. 2A, the control unit 101 accepts selection of a new setup button 201 by the user, and then accepts input of an OK button 203. In response to this, the control unit 101 determines that the connection start instruction has been accepted.

In S402, the control unit 101 of the digital camera 100 performs scan to try wireless reception of a signal including an SSID and a BSSID from one AP or each of a plurality of APs.

In S403, the control unit 101 of the digital camera 100 accepts a connection AP selection instruction from the user via the operation unit 105. For example, the control unit 101 accepts input of a connection button 211 in a state in which a selection screen 210 is displayed on the display unit 106, as shown in Fig. 2B.

In S404, the control unit 101 of the digital camera 100 associates, as the connection settings of the SSID and ch of a desired AP, the SSID and ch of an AP corresponding to the connection AP selection instruction accepted in S403, and stores them in a working memory 104.

In S405, the control unit 101 of the digital camera 100 transmits a connection request to a connection trial target AP in order to perform connection processing in cooperation with the AP.

In S406, the control unit 101 of the digital camera 100 receives a connection OK notification from the connection trial target AP.

In S407, the control unit 101 of the digital camera 100 determines that the connection trial target AP is the desired AP, and establishes a wireless LAN connection with the AP. After establishing the wireless LAN connection, for example, the control unit 101 displays a completion screen 220 on the display unit 106, as shown in Fig. 2C, and accepts input of an OK button 221 from the user. The control unit 101 transmits a connection completion notification to the AP, and receives a connection completion notification from the AP.

In S408, if the control unit 101 of the digital camera 100 determines that the SNR of the AP during connection (to be referred to as the connected AP hereinafter) becomes lower than an SNR threshold, it designates an AP of a desired SSID stored in the working memory 104 and performs scan. In the scan, the control unit 101 obtains the frequency band of the connected AP and that of a roaming target AP. Note that in the embodiment, the control unit 101 obtains the frequency band of the connected AP in S408, but can also obtain it in S407 that is a timing when the digital camera 100 is connected to the connected AP.

In S409, the control unit 101 of the digital camera 100 determines whether the frequency band of the connected AP and that of the roaming target AP are different. If the control unit 101 determines that the frequency band of the connected AP and that of the roaming target AP are different, it changes the SNR threshold that is an SNR condition serving as a roaming condition. For example, when the frequency band of the connected AP is "2.4 GHz" and that of the roaming target AP is "6 GHz", the control unit 101 determines that the frequency band of the roaming target AP is larger than that of the connected AP, and changes the SNR condition serving as a roaming condition, that is, the SNR threshold from originally set "15" to "20". In other words, when the frequency band of the roaming target AP is larger than that of the connected AP, the control unit 101 relaxes the roaming condition to facilitate roaming. When the frequency band of the connected AP is "6 GHz" and that of the roaming target AP is "2.4 GHz", the control unit 101 determines that the frequency band of the roaming target AP is smaller than that of the connected AP, and changes the SNR condition serving as a roaming condition, that is, the SNR threshold from originally set "15" to "10". In other words, when the frequency band of the roaming target AP is smaller than that of the connected AP, the control unit 101 tightens the roaming condition to make roaming difficult.

In S410, if the control unit 101 of the digital camera 100 determines that the SNR of the connected AP is lower than the SNR threshold and the roaming condition is satisfied, it transmits a connection request to the connection trial target AP in order to perform connection processing in cooperation with the AP.

In S411, the control unit 101 of the digital camera 100 receives a connection OK notification from the connection trial target AP.

In S412, the control unit 101 of the digital camera 100 determines that the connection trial target AP is the desired AP, and establishes a wireless LAN connection with the AP. After establishing the wireless LAN connection, the control unit 101 transmits a connection completion notification to the AP, and receives a connection completion notification from the AP.

### <Control Procedure of Digital Camera>

The control procedure of the digital camera 100 according to the first embodiment will be explained with reference to Fig. 5. Fig. 5 is a flowchart showing processing of the digital camera according to the first embodiment.

In step S501, the control unit 101 of the digital camera 100 determines whether it has accepted a connection start instruction from the user. If the control unit 101 determines that it has accepted a connection start instruction, it advances the process to step S502. If the control unit 101 determines that it has not accepted a connection start instruction, it repeats the processing in step S501. The processing in step S501 corresponds to S401 in Fig. 4.

In step S502, the control unit 101 of the digital camera 100 performs scan to try wireless reception of a signal including an SSID and a BSSID from one AP or each of a plurality of APs. The processing in step S502 corresponds to S402 in Fig. 4.

In step S503, the control unit 101 of the digital camera 100 determines whether it has accepted a connection AP selection instruction. If the control unit 101 determines that it has accepted a connection AP selection instruction, it advances the process to step S504. If the control unit 101 determines that it has not accepted a connection AP selection instruction, it repeats the processing in step S503.

In step S504, the control unit 101 of the digital camera 100 associates the SSID and ch of the AP included in the accepted connected AP selection instruction as the connection settings of the SSID and ch of a desired AP, and stores them in the working memory 104. The processing in step S504 corresponds to S404 in Fig. 4.

In step S505, the control unit 101 of the digital camera 100 transmits a connection request to a connection trial target AP in order to perform connection processing in cooperation with the AP. The processing in step S505 corresponds to S405 in Fig. 4.

In step S506, the control unit 101 of the digital camera 100 receives a connection OK notification from the connection trial target AP. The processing in step S506 corresponds to S406 in Fig. 4.

In step S507, the control unit 101 of the digital camera 100 determines that the connection trial target AP is the desired AP, and establishes a wireless LAN connection with the AP. After the establishment, the control unit 101 transmits a connection completion notification to the AP, and receives a connection completion notification from the AP. The processing in step S507 corresponds to S407 in Fig. 4.

In step S508, the control unit 101 of the digital camera 100 determines whether a connection end instruction has been accepted from the user. If the control unit 101 determines that the connection end instruction has been accepted, it ends the process. If the control unit 101 determines that the connection end instruction has not been accepted, it advances the process to step S509.

In step S509, the control unit 101 of the digital camera 100 determines whether the SNR of the connected AP becomes lower than the SNR threshold. If the control unit 101 determines that the SNR of the connected AP becomes lower than the SNR threshold, it advances the process to step S510. If the control unit 101 determines that the SNR of the connected AP does not become lower than the SNR threshold, it returns to the processing in step S508 to repeat the process from step S508.

In step S510, the control unit 101 of the digital camera 100 designates an AP of a desired SSID stored in the working memory 104 and performs scan. In the scan, the control unit 101 obtains the frequency band of the connected AP and that of a roaming target AP. The processing in step S510 corresponds to S408 in Fig. 4.

In step S511, the control unit 101 of the digital camera 100 determines whether the frequency band of the roaming target AP is larger than that of the connected AP. If the control unit 101 determines that the frequency band of the roaming target AP is larger than that of the connected AP, it advances the process to step S512. If the control unit 101 determines that the frequency band of the roaming target AP is not larger than that of the connected AP, it advances the process to step S513.

In step S512, the control unit 101 of the digital camera 100 changes the SNR condition. The change of the SNR condition here is to increase the SNR threshold serving as a roaming condition. The processing in step S512 corresponds to S409 in Fig. 4.

In step S513, the control unit 101 of the digital camera 100 changes the SNR condition. The change of the SNR condition here is to decrease the SNR threshold serving as a roaming condition. The processing in step S513 corresponds to S409 in Fig. 4.

In step S514, the control unit 101 of the digital camera 100 determines, based on the SNR of the connected AP and the SNR threshold, whether the roaming condition is satisfied. If the SNR of the connected AP is lower than the SNR threshold, the control unit 101 determines that the roaming condition is satisfied, and advances the process to step S515 to execute roaming. If the SNR of the connected AP is not lower than the SNR threshold, the control unit 101 determines that the roaming condition is not satisfied, and returns to the processing in step S508 without performing roaming.

In step S515, the control unit 101 of the digital camera 100 transmits a connection request to the connection trial target AP also serving as a roaming target in order to perform connection processing in cooperation with the AP. The processing in step S515 corresponds to S410 in Fig. 4.

In step S516, the control unit 101 of the digital camera 100 receives a connection OK notification from the connection trial target AP. The processing in step S516 corresponds to S411 in Fig. 4.

In step S517, the control unit 101 of the digital camera 100 determines that the connection trial target AP is the desired AP, and establishes a wireless LAN connection with the AP. After the establishment, the control unit 101 transmits a connection completion notification to the AP, and receives a connection completion notification from the AP. The processing in step S517 corresponds to S412 in Fig. 4.

According to the first embodiment, the digital camera 100 obtains the frequency band of a connected AP and that of a roaming target AP. When the digital camera 100 determines that the frequency band of the roaming target AP is larger than that of the connected AP, it changes, to a large value, the SNR threshold that is an SNR condition serving as a roaming condition, so as to facilitate transfer. When the digital camera 100 determines that the roaming condition is satisfied, it executes roaming. According to the embodiment, a decrease in throughput after roaming can be reduced, and roaming can be easily performed to a frequency band of high throughput.

### (Second Embodiment)

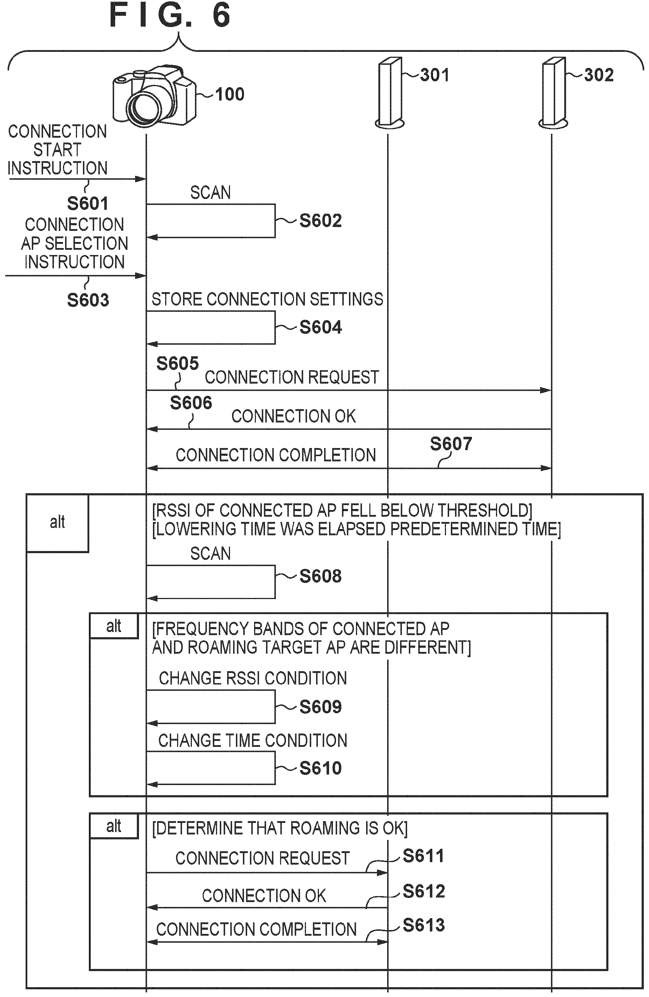

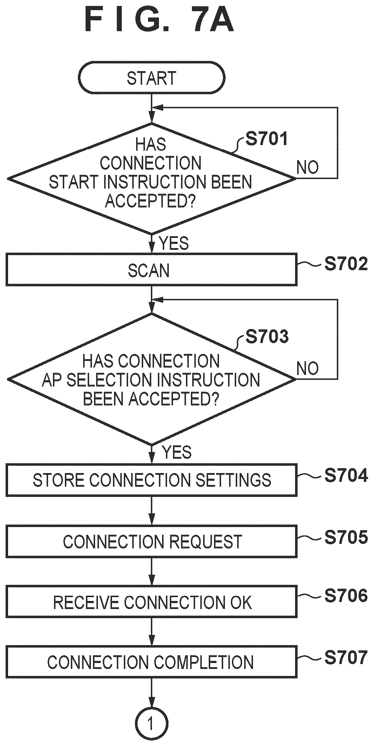

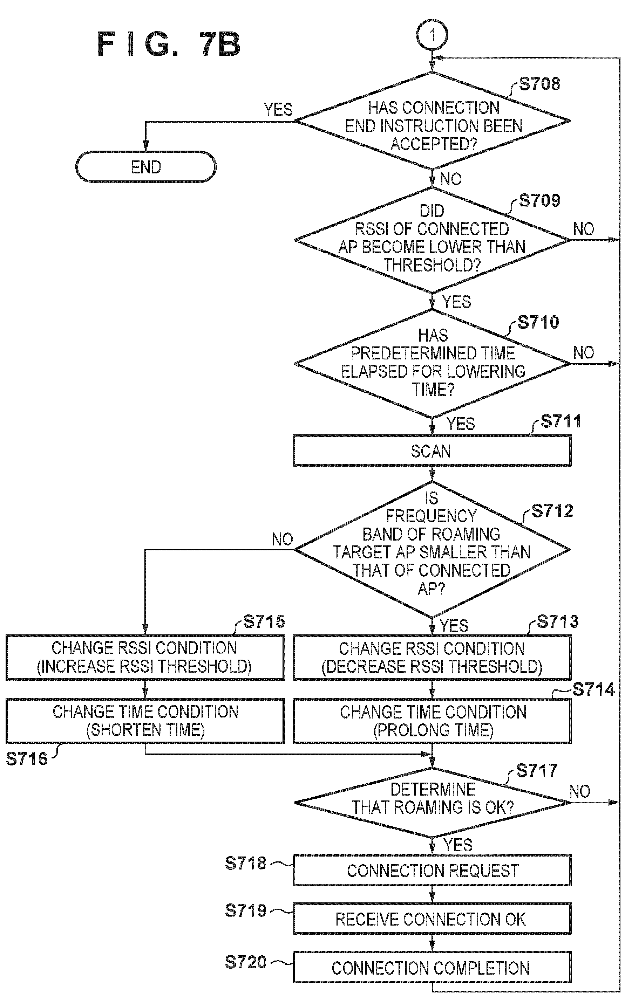

A roaming method according to the second embodiment will be explained with reference to Figs. 6 and 7.

### <Control Sequence of Digital Camera>

The control sequence of a digital camera 100 according to the second embodiment will be explained with reference to Fig. 6. Fig. 6 is a sequence chart showing processing between the digital camera and an AP according to the second embodiment.

In S601, a control unit 101 of the digital camera 100 accepts a connection start instruction from the user via an operation unit 105. For example, in a state in which a setup screen 200 is displayed on a display unit 106, as shown in Fig. 2A, the control unit 101 accepts selection of a new setup button 201 by the user, and then accepts input of an OK button 203. In response to this, the control unit 101 accepts the connection start instruction.

In S602, the control unit 101 of the digital camera 100 performs scan to try wireless reception of a signal including an SSID and a BSSID from one AP or each of a plurality of APs.

In S603, the control unit 101 of the digital camera 100 accepts a connection AP selection instruction from the user via the operation unit 105. For example, the control unit 101 accepts input of a connection button 212 in a state in which a selection screen 210 is displayed on the display unit 106, as shown in Fig. 2B.

In S604, the control unit 101 of the digital camera 100 associates, as the connection settings of the SSID and ch of a desired AP, the SSID and ch of an AP corresponding to the connection AP selection instruction received in S603, and stores them in a working memory 104.

In S605, the control unit 101 of the digital camera 100 transmits a connection request to a connection trial target AP in order to perform connection processing in cooperation with the AP.

In S606, the control unit 101 of the digital camera 100 receives a connection OK notification from the connection trial target AP.

In S607, the control unit 101 of the digital camera 100 determines that the connection trial target AP is the desired AP, and establishes a wireless LAN connection with the AP. After establishing the wireless LAN connection, for example, the control unit 101 displays a completion screen 220 on the display unit 106, as shown in Fig. 2C, and accepts input of an OK button 221 from the user. The control unit 101 transmits a connection completion notification to the AP, and receives a connection completion notification from the AP.

In S608, if the control unit 101 of the digital camera 100 determines that the RSSI of the connected AP becomes lower than an RSSI threshold and the lowering state continues for a communication deterioration determination time, it designates an AP of a desired SSID stored in the working memory 104 and performs scan. In the scan, the control unit 101 obtains the frequency band of the connected AP and that of a roaming target AP. For example, when the control unit 101 determines that the state in which the RSSI of the connected AP becomes lower than the RSSI threshold continues for a communication deterioration determination time "30 sec", it designates an AP having a desired SSID "Conon" stored in the working memory 104, and performs scan. In the scan, the control unit 101 obtains the frequency band "2.4 GHz" of the connected AP and the frequency band "6 GHz" of the roaming target AP.

In S609, if the control unit 101 of the digital camera 100 determines that the frequency band of the connected AP and that of the roaming target AP are different, it changes the RSSI threshold that is an RSSI condition serving as a roaming condition. For example, when the frequency band of the connected AP is "6 GHz" and that of the roaming target AP is "2.4 GHz", the control unit 101 determines that the frequency band of the roaming target AP is smaller than that of the connected AP, and changes, from originally set "-50" to "-75", the RSSI threshold that is an RSSI condition serving as a roaming condition. In other words, when the frequency band of the roaming target AP is smaller than that of the connected AP, the control unit 101 tightens the roaming condition to make roaming difficult. When the frequency band of the connected AP is "2.4 GHz" and that of the roaming target AP is "6 GHz", the control unit 101 determines that the frequency band of the roaming target AP is larger than that of the connected AP, and changes the RSSI threshold serving as a roaming condition from originally set "-50" to "-25". In other words, when the frequency band of the roaming target AP is larger than that of the connected AP, the control unit 101 relaxes the roaming condition to facilitate roaming.

In S610, if the control unit 101 of the digital camera 100 determines that the frequency band of the roaming target AP is smaller than that of the connected AP, it changes the condition of the communication deterioration determination time serving as a roaming condition. For example, the control unit 101 changes, from originally set "30 sec" to "60 sec", the condition of the communication deterioration determination time serving as a roaming condition. In other words, when the frequency band of the roaming target AP is smaller than that of the connected AP, the control unit 101 makes roaming difficult.

In S611, if the control unit 101 of the digital camera 100 determines that the roaming condition is satisfied, it transmits a connection request to the connection trial target AP in order to perform connection processing in cooperation with the AP.

In S612, the control unit 101 of the digital camera 100 receives a connection OK notification from the connection trial target AP.

In S613, the control unit 101 of the digital camera 100 determines that the connection trial target AP is the desired AP, and establishes a wireless LAN connection with the AP. After establishing the wireless LAN connection, the control unit 101 transmits a connection completion notification to the AP, and receives a connection completion notification from the AP.

### <Control Procedure of Digital Camera>

The control procedure of the digital camera 100 according to the second embodiment will be explained with reference to Figs. 7A and 7B. Figs. 7A and 7B are a flowchart showing processing of the digital camera according to the second embodiment.

In step S701, the control unit 101 of the digital camera 100 determines whether it has accepted a connection start instruction. If the control unit 101 determines that it has accepted a connection start instruction, it advances the process to step S702. If the control unit 101 determines that it has not accepted a connection start instruction, it repeats the processing in step S701. The processing in step S701 corresponds to S601 in Fig. 6.

In step S702, the control unit 101 of the digital camera 100 performs scan to try wireless reception of a signal including an SSID and a BSSID from one AP or each of a plurality of APs. The processing in step S702 corresponds to S602 in Fig. 6.

In step S703, the control unit 101 of the digital camera 100 determines whether it has accepted a connection AP selection instruction. If the control unit 101 determines that it has accepted a connection AP selection instruction, it advances the process to step S704. If the control unit 101 determines that it has not accepted a connection AP selection instruction, it repeats the processing in step S703.

In step S704, the control unit 101 of the digital camera 100 associates an SSID and ch included in the received connected AP selection instruction as the connection settings of the SSID and ch of a desired AP, and stores them in the working memory 104. The processing in step S704 corresponds to S604 in Fig. 6.

In step S705, the control unit 101 of the digital camera 100 transmits a connection request to a connection trial target AP in order to perform connection processing in cooperation with the AP. The processing in step S705 corresponds to S605 in Fig. 6.

In step S706, the control unit 101 of the digital camera 100 receives a connection OK notification from the connection trial target AP. The processing in step S706 corresponds to S606 in Fig. 6.

In step S707, the control unit 101 of the digital camera 100 determines that the connection trial target AP is the desired AP, and establishes a wireless LAN connection with the AP. After the establishment, the control unit 101 transmits a connection completion notification to the AP, and receives a connection completion notification from the AP. The processing in step S707 corresponds to S607 in Fig. 6.

In step S708, the control unit 101 of the digital camera 100 determines whether a connection end instruction has been accepted. If the control unit 101 determines that the connection end instruction has been accepted, it ends the process. If the control unit 101 determines that the connection end instruction has not been accepted, it advances the process to step S709.

In step S709, the control unit 101 of the digital camera 100 determines whether the RSSI of the connected AP becomes lower than the RSSI threshold. If the control unit 101 determines that the RSSI of the connected AP becomes lower than the RSSI threshold, it advances the process to step S710. If the control unit 101 determines that the RSSI of the connected AP does not become lower than the RSSI threshold, it returns to the processing in step S708 to repeat the process from step S708.

In step S710, the control unit 101 of the digital camera 100 determines whether the time during which the RSSI of the connected AP becomes lower than the RSSI threshold becomes longer than the communication deterioration determination time. If the control unit 101 determines that the time during which the RSSI of the connected AP becomes lower than the RSSI threshold becomes longer than the communication deterioration determination time, it advances the process to step S711. If the control unit 101 determines that the time during which the RSSI of the connected AP becomes lower than the RSSI threshold does not become longer than the communication deterioration determination time, it returns to the processing in step S708.

In step S711, the control unit 101 of the digital camera 100 designates an AP of a desired SSID stored in the working memory 104 and performs scan. In the scan, the control unit 101 obtains the frequency band of the connected AP and that of a roaming target AP. The processing in step S711 corresponds to S608 in Fig. 6.

In step S712, the control unit 101 of the digital camera 100 determines whether the frequency band of the roaming target AP is smaller than that of the connected AP. If the control unit 101 determines that the frequency band of the roaming target AP is smaller than that of the connected AP, it advances the process to step S713. If the control unit 101 determines that the frequency band of the roaming target AP is not smaller than that of the connected AP, it advances the process to step S715.

In step S713, the control unit 101 of the digital camera 100 changes the RSSI condition. The change of the RSSI condition here is to decrease the RSSI threshold serving as a roaming condition. The processing in step S713 corresponds to S609 in Fig. 6.

In step S714, the control unit 101 of the digital camera 100 changes the time condition. The change of the time condition here is to prolong the communication deterioration determination time serving as a roaming condition. The processing in step S714 corresponds to S610 in Fig. 6.

In step S715, the control unit 101 of the digital camera 100 changes the RSSI condition. The change of the RSSI condition here is to increase the RSSI threshold serving as a roaming condition. The processing in step S713 corresponds to S609 in Fig. 6.

In step S716, the control unit 101 of the digital camera 100 changes the time condition. The change of the time condition here is to shorten the communication deterioration determination time serving as a roaming condition. The processing in step S716 corresponds to S610 in Fig. 6.

In step S717, the control unit 101 of the digital camera 100 determines, based on the RSSI threshold and the communication deterioration determination time, whether the roaming condition is satisfied. If the control unit 101 determines that the roaming condition is satisfied, it advances the process to step S718 to execute roaming. More specifically, when the RSSI of the connected AP becomes lower than the RSSI threshold and the lowering time becomes longer than the communication deterioration determination time, the control unit 101 determines that the roaming condition is satisfied. In contrast, if the control unit 101 determines that the roaming condition is not satisfied, it returns to the processing in step S708 without performing roaming.

In step S718, the control unit 101 of the digital camera 100 transmits a connection request to the connection trial target AP also serving as a roaming target in order to perform connection processing in cooperation with the AP. The processing in step S718 corresponds to S611 in Fig. 6.

In step S719, the control unit 101 of the digital camera 100 receives a connection OK notification from the connection trial target AP. The processing in step S719 corresponds to S612 in Fig. 6.

In step S720, the control unit 101 of the digital camera 100 determines that the connection trial target AP is a desired AP, and establishes a wireless LAN connection with the AP. After the establishment, the control unit 101 transmits a connection completion notification to the AP, and receives a connection completion notification from the AP. The processing in step S720 corresponds to S613 in Fig. 6.

According to the second embodiment, the digital camera 100 obtains the frequency band of a connected AP and that of a roaming target AP. When the digital camera 100 determines that the frequency band of the roaming target AP is smaller than that of the connected AP, it changes, to a small value, the RSSI threshold that is an RSSI condition serving as a roaming condition, so as to make transfer difficult. Also, when the digital camera 100 determines that the frequency band of the roaming target AP is smaller than that of the connected AP, it changes, to a large value, the condition of the communication deterioration determination time serving as a roaming condition, so as to make transfer difficult. When the digital camera 100 determines that the roaming condition is satisfied, it executes roaming. Hence, according to the embodiment, a decrease in throughput after roaming can be reduced, and roaming can be easily performed to a frequency band of high throughput.

Preferred embodiments of the present invention have been described above. However, the present invention is not limited to these embodiments, and various changes and modifications can be made without departing from the spirit and scope of the invention.

The above-described embodiments may be combined, or some processes may be omitted. For example, in the first embodiment, when the state in which the SNR of a connected AP becomes lower than an SNR threshold continues for the communication deterioration determination time, the control unit 101 may change the SNR threshold. In the second embodiment, when the RSSI of a connected AP becomes lower than an RSSI threshold, the control unit 101 may change the RSSI threshold even if the communication deterioration determination time has not elapsed. The control unit 101 may be so constituted as to determine the roaming condition based on either the SNR or the RSSI, and the user may be able to select either the SNR threshold or the RSSI threshold.

The above-described embodiments have explained an example in which the frequency band of a connected AP and that of a roaming target AP are compared and the SNR threshold or the RSSI threshold is changed regardless of which of the frequency bands is larger. However, the present invention is not limited to this. For example, only when the frequency band of a roaming target AP is larger than that of a connected AP, the threshold may be changed. Alternatively, only when the frequency band of a roaming target AP is smaller than that of a connected AP, the threshold may be changed.

For example, in the above-described first embodiment, when the SNR becomes lower than the SNR threshold, processing from S408 is executed. However, the condition that processing from S408 is executed is not limited to this. For example, instead of or in addition to the above condition, when the signal strength of a connected AP becomes lower than a strength threshold (for example, 15), processing from S408 may be executed.

For example, in the above-described second embodiment, when the RSSI becomes lower than the RSSI threshold, processing from S608 is executed. However, the condition that processing from S608 is executed is not limited to this. For example, instead of or in addition to the above condition, when a state in which the signal strength of a connected AP becomes lower than a strength threshold (for example, 15) continues for a communication deterioration determination time (for example, 30 sec), processing from S608 may be executed.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A communication apparatus comprising:
an obtaining means configured to obtain information of a plurality of access points of different frequency bands;
a change means configured to compare a frequency band during connection and a frequency band of a roaming target, and change a roaming condition for executing roaming; and
an execution means configured to execute roaming in a case where a signal of the frequency band during connection satisfies the roaming condition.

2. The apparatus according to claim 1, wherein the change means changes a signal-to-noise ratio (SNR) condition as the roaming condition.

3. The apparatus according to claim 1, wherein the change means changes a Received Signal Strength Indicator (RSSI) condition as the roaming condition.

4. The apparatus according to claim 1, wherein the change means changes, as the roaming condition, a determination time for determining a time during which a communication time worsens.

5. The apparatus according to claim 2, wherein in a case where the frequency band of the roaming target is larger than the frequency band during connection, the change means relaxes the SNR condition.

6. The apparatus according to claim 2, wherein in a case where the frequency band of the roaming target is smaller than the frequency band during connection, the change means tightens the SNR condition.

7. The apparatus according to claim 3, wherein in a case where the frequency band of the roaming target is larger than the frequency band during connection, the change means relaxes the RSSI condition.

8. The apparatus according to claim 3, wherein in a case where the frequency band of the roaming target is smaller than the frequency band during connection, the change means tightens the RSSI condition.

9. The apparatus according to claim 4, wherein in a case where the frequency band of the roaming target is larger than the frequency band during connection, the change means shortens the determination time.

10. The apparatus according to claim 4, wherein in a case where the frequency band of the roaming target is smaller than the frequency band during connection, the change means prolongs the determination time.

11. A communication method comprising:
obtaining information of a plurality of access points of different frequency bands;
comparing a frequency band during connection and a frequency band of a roaming target to change a roaming condition for executing roaming; and
executing roaming in a case where a signal of the frequency band during connection satisfies the roaming condition.

12. A non-transitory computer-readable storage medium storing a computer program that, when read and executed by a computer, causes the computer to function as
an obtaining means configured to obtain information of a plurality of access points of different frequency bands;
a change means configured to compare a frequency band during connection and a frequency band of a roaming target, and change a roaming condition for executing roaming; and
an execution means configured to execute roaming in a case where a signal of the frequency band during connection satisfies the roaming condition.
